# EUROPÄISCHE PATENTANMELDUNG

(11) **EP 4 310 025 A1**
(43) Veröffentlichungstag der Anmeldung: **24.01.2024**
(21) Anmeldenummer: 22186514.0
(22) Anmeldetag: 22.07.2022
(51) Int. Cl.: B65G 1/04

(54) **VERFAHREN ZUR ÄNDERUNG DER FAHRRICHTUNG EINES TRANSPORTFAHRZEUGS FÜR AUTOMATISIERTE LAGER**

(71) Anmelder: Goya Systec S.R.L., 907015 Agigea (RO)
(72) Erfinder: Gligor, Traian, 63829 Krombach (DE)
(74) Vertreter: Limbeck, Achim

(57) **Zusammenfassung**

Die vorliegende Erfindung betrifft ein Verfahren zur Änderung der Fahrrichtung eines Transportfahrzeugs (1) für automatisierte Lager mit einer Vielzahl an parallelen Gassen und/oder Ebenen, wobei das Transportfahrzeug (1) mittels eines Antriebs entlang der Gassen verfahrbar ist, um beidseitig der Gassen Ladegüter oder Ladegutträger ein- und/oder auszulagern, wobei der Antrieb des Transportfahrzeugs (1) eine Steuerung und das Transportfahrzeug (1) mindestens zwei an jedenfalls einem Rahmen und/oder Gehäuse fest montierte Antriebsräder (10', 10", 10‴, 10"") umfassen. Das erfindungsgemäße Verfahren ist dadurch gekennzeichnet, dass den mindestens zwei Antriebsrädern (10', 10", 10‴, 10"") jeweils mindestens ein Antriebsmotor (12) zugeordnet ist, welcher über die Steuerung separat ansteuerbar ist, wobei die Steuerung vorsieht, dass die Antriebsräder (10', 10", 10‴, 10"") durch die Antriebsmotoren (12) in der Weise angetrieben werden, dass durch ein zumindest teilweise entgegengesetztes Antreiben der einzelnen Antriebsräder (10', 10", 10‴, 10"") ein Drehen des Transportfahrzeugs (1) um eine vertikale Achse (A) bewirkt wird.

## Beschreibung

### Technisches Gebiet

Die vorliegende Erfindung betrifft ein Verfahren zur Änderung der Fahrrichtung eines Transportfahrzeugs 1 für automatisierte Lager mit einer Vielzahl an parallelen Gassen und/oder Ebenen gemäß dem Oberbegriff des Patentanspruchs 1.

### Stand der Technik

Bei der Verwaltung automatisierter Lagerregale werden Transportgeräte eingesetzt, welche in verschiedenen Ebenen und Gassen die Güter in den Regalfächern hineinbefördern beziehungsweise aus den Regalen herausnehmen können. Die hierfür eingesetzten Transportfahrzeuge verfügen üblicherweise über mindestens vier Räder, wobei mindestens ein Rad direkt oder indirekt angetrieben wird. Manchmal werden je zwei koaxial angeordnete Räder mit einer Achse verbunden und beide mit einem Antrieb angetrieben.

Bei Fahrzeugen, die eine Änderung der Fahrtrichtung erlauben, werden alle Fahrzeug-Räder um eine vertikale Achse gedreht oder es werden zusätzliche Räder verwendet, so dass das Fahrzeug bei einer Kreuzung, die quer angebrachte Räder an die Schiene presst und die vorher tragenden Räder von der Schiene entkoppelt (siehe EP 3 169 612 B1).

Das Verdrehen der Fahrzeug-Haupträder erfordert eine zusätzliche Achse für jedes Rad und zumindest einen entsprechenden zusätzlichen Antrieb. Das Verwenden von zwei Radsätzen von je vier Rädern und der erforderliche Mechanismus zum Ändern des Radsatzes sind komplex, was zu einer erhöhten Anzahl an Bauteilen, erhöhtem Montage-Aufwand und unnötigen Kosten verbunden ist.

### Darstellung der Erfindung

Der vorliegenden Erfindung liegt die Aufgabe zugrunde, die vorgenannten Nachteile zu beseitigen und ein Verfahren zu schaffen, welche es erlaubt, die Fahrtrichtung eines Transportfahrzeuges für automatisierte Regallager auf einfache und technisch wenig komplexe Weise ändern zu können.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Verfahrens sind in den abhängigen Unteransprüchen angegeben.

Erfindungsgemäß wird die voranstehende Aufgabe dadurch gelöst, dass zumindest zwei und bevorzugt sämtliche Räder und/oder Antriebsräder des Transportfahrzeugs einzeln oder je zwei gleichzeitig angetrieben werden, so dass durch das entgegengesetzte Antreiben der einzelnen Räder ein Drehen des Transportfahrzeugs um seine vertikale Achse bewirkt wird. Ein Drehen des Transportfahrzeugs wird begünstigt, je kleiner der Abstand zwischen zwei in einer Linie (in die HauptBewegungsrichtung) befindlichen Rädern und/oder Antriebsrädern ist im Vergleich zu den koaxial angeordneten Rädern und/oder Antriebsrädern.

Diese vorliegende Lösung bedarf keiner zusätzlichen Mechanik und benötigt keine zusätzlichen Antriebe, um das Transportfahrzeug um die eigene vertikale Achse zu drehen.

### Kurzbeschreibung der Zeichnung

Weitere Ziele, Merkmale, Vorteile und Anwendungsmöglichkeiten des erfindungsgemäßen Verfahrens ergeben sich aus der nachfolgenden Beschreibung eines Ausführungsbeispiels anhand der Zeichnung.

In der Zeichnung zeigt
Fig. 1 eine schematische Darstellung eines erfindungsgemäßen Transportfahrzeuges in einer vorteilhaften Ausführungsform in der Draufsicht;
Fig. 2 eine schematische Darstellung des erfindungsgemäßen Transportfahrzeuges in einer weiteren vorteilhaften Ausführungsform in der Draufsicht mit mechanischer Kopplung;
Fig. 3 eine schematische Darstellung des erfindungsgemäßen Transportfahrzeuges in einer vorteilhaften Ausführungsform in der Draufsicht mit dauerhaft angewinkelten positionierten Rädern/Antriebsrädern.

### Ausführung der Erfindung

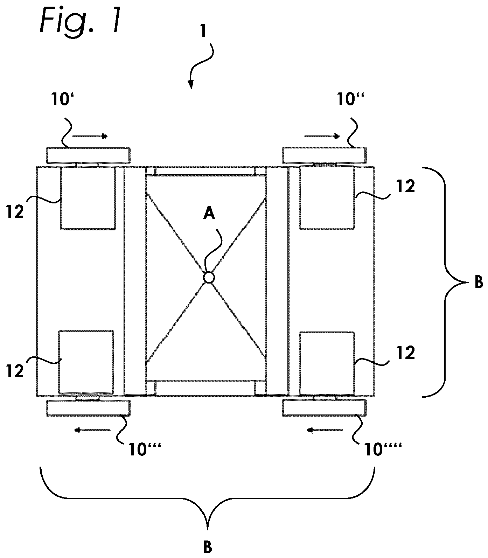

Bei der erfindungsgemäßen Verfahren zur Änderung der Fahrrichtung eines Transportfahrzeugs 1 ist das Transportfahrzeug 1 mittels eines Antriebs entlang der Gassen verfahrbar, um beidseitig der Gassen Ladegüter oder Ladegutträger ein- und/oder auszulagern, wobei - wie aus Fig. 1 ersichtlich - der Antrieb des Transportfahrzeugs 1 eine Steuerung und das Transportfahrzeug 1 mindestens zwei an jedenfalls einem Rahmen und/oder Gehäuse fest montierte Antriebsräder 10', 10", 10‴, 10‴′ umfassen.

Erfindungsgemäß ist den mindestens zwei Antriebsrädern 10', 10", 10‴, 10‴′ jeweils mindestens ein Antriebsmotor 12 zugeordnet, welcher über die Steuerung separat ansteuerbar ist, wobei die Steuerung vorsieht, dass die Antriebsräder 10', 10", 10"', 10‴′ durch die Antriebsmotoren 12 in der Weise angetrieben werden, dass durch ein zumindest teilweise entgegengesetztes Antreiben der einzelnen Antriebsräder 10', 10", 10‴, 10‴′ ein Drehen des Transportfahrzeugs 1 um eine vertikale Achse A bewirkt wird.

Wie aus Fig. 1 ersichtlich, ist die vertikale Achse A vorzugsweise innerhalb eines Bereichs B des Transportfahrzeugs 1 angeordnet, wobei eine weitere, beispielhafte Ausführungsform der Erfindung vorsieht, dass die Drehung um die vertikale Achse A kreis- oder ellipsenförmig erfolgt.

Wie bereits eingangs erwähnt, umfasst die vorliegende Erfindung ebenfalls ein Transportfahrzeug 1 zur Durchführung eines Verfahrens, welches mittels eines Antriebs entlang der Gassen verfahrbar ist, um beidseitig der Gassen Ladegüter oder Ladegutträger ein- und/oder auszulagern, wobei der Antrieb des Transportfahrzeugs 1 eine Steuerung und das Transportfahrzeug 1 mindestens zwei an jedenfalls einem Rahmen und/oder Gehäuse fest montierte Antriebsräder 10', 10", 10‴, 10‴′ aufweist und wobei der Antrieb des Transportfahrzeugs 1 eine Steuerung und das Transportfahrzeug 1 mindestens zwei Antriebsräder 10', 10", 10‴, 10‴′ umfassen.

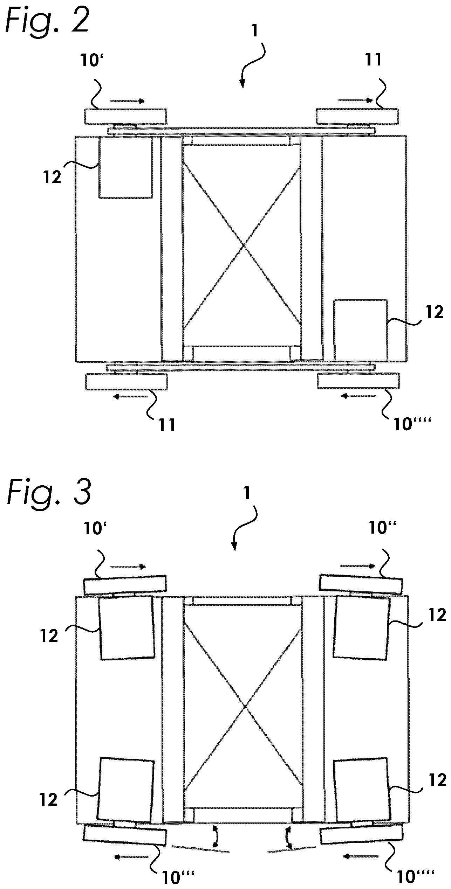

In einer besonders vorteilhaften Ausführungsform der Erfindung ist mindestens zwei Antriebsrädern 10', 10", 10‴, 10‴′ jeweils mindestens ein Antriebsmotor 12 zugeordnet, welcher über die Steuerung separat ansteuerbar ist, wobei das Transportfahrzeug 1 vorzugsweise mindestens ein nicht angetriebenes Rad 11 umfasst und vorteilhafterweise mindestens ein Antriebsrad 10', 10", 10‴, 10‴′ mit einem nicht angetriebenen Rad 11 des Transportfahrzeuges 1 mechanisch gekoppelt ist, in der Weise, dass diese stets in die gleiche Richtung drehen (siehe Fig. 2).

Weiterhin kann es vorteilhaft sein, dass die Antriebsräder 10', 10", 10"', 10‴′ und/oder nicht angetriebene Räder 11 durch die Steuerung jeweils einzeln und/oder gekoppelt sind.

Überdies sieht die Erfindung vor, dass der Abstand zwischen den Antriebsrädern 10', 10", 10‴, 10‴′ und/oder den nicht angetriebenen Rädern 11 in Fahrrichtung F vorzugsweise kleiner/gleich ist wie der Abstand zwischen der linken und der rechten Räderreihe.

Darüber hinaus können die Antriebsräder 10', 10", 10‴, 10‴′ und/oder die nicht angetriebenen Räder 11 dauerhaft angewinkelt positioniert sein (siehe Fig. 3), um ein Drehen des Transportfahrzeugs 1 zu begünstigen.

### Liste der Bezugsziffern

- 1: Transportfahrzeug
- 10', 10", 10‴, 10′‴: Antriebsräder
- 11: nicht direkt angetriebene Räder
- 12: Antriebsmotor
- A: Achse
- B: Bereich des Transportfahrzeugs

## Patentansprüche

1. Verfahren zur Änderung der Fahrrichtung eines Transportfahrzeugs (1) für automatisierte Lager mit einer Vielzahl an parallelen Gassen und/oder Ebenen, wobei das Transportfahrzeug (1) mittels eines Antriebs entlang der Gassen verfahrbar ist, um beidseitig der Gassen Ladegüter oder Ladegutträger ein- und/oder auszulagern, wobei der Antrieb des Transportfahrzeugs (1) eine Steuerung und das Transportfahrzeug (1) mindestens zwei an jedenfalls einem Rahmen und/oder Gehäuse fest montierte Antriebsräder (10', 10", 10‴, 10‴′) umfassen,
**dadurch gekennzeichnet, dass**
den mindestens zwei Antriebsrädern (10', 10", 10‴, 10‴′) jeweils mindestens ein Antriebsmotor (12) zugeordnet ist, welcher über die Steuerung separat ansteuerbar ist, wobei die Steuerung vorsieht, dass die Antriebsräder (10', 10", 10‴, 10‴′) durch die Antriebsmotoren (12) in der Weise angetrieben werden, dass durch ein zumindest teilweise entgegengesetztes Antreiben der einzelnen Antriebsräder (10', 10", 10‴, 10‴′) ein Drehen des Transportfahrzeugs (1) um eine vertikale Achse (A) bewirkt wird.

2. Verfahren nach Anspruch 1,
**dadurch gekennzeichnet, dass**
die vertikale Achse (A) innerhalb eines Bereichs (B) des Transportfahrzeugs (1) angeordnet ist.

3. Verfahren (1) nach Anspruch 1 oder 2,
**dadurch gekennzeichnet, dass**
die Drehung um die vertikale Achse (A) kreis- oder ellipsenförmig erfolgt.

4. Transportfahrzeug (1) zur Durchführung eines Verfahrens nach den Ansprüchen 1 bis 3, welches mittels eines Antriebs entlang der Gassen verfahrbar ist, um beidseitig der Gassen Ladegüter oder Ladegutträger ein- und/oder auszulagern, wobei der Antrieb des Transportfahrzeugs (1) eine Steuerung und das Transportfahrzeug (1) mindestens zwei an jedenfalls einem Rahmen und/oder Gehäuse fest montierte Antriebsräder (10', 10", 10‴, 10′‴) aufweist, wobei der Antrieb des Transportfahrzeugs (1) eine Steuerung und das Transportfahrzeug (1) mindestens zwei Antriebsräder (10', 10", 10‴, 10‴′) umfassen,
**dadurch gekennzeichnet, dass**
mindestens zwei Antriebsrädern (10', 10", 10‴, 10‴′) jeweils mindestens ein Antriebsmotor (12) zugeordnet ist, welcher über die Steuerung separat ansteuerbar ist.

5. Transportfahrzeug (1) nach Anspruch 4,
**dadurch gekennzeichnet, dass**
es mindestens ein nicht angetriebenes Rad (11) umfasst.

6. Transportfahrzeug (1) nach Anspruch 5,
**dadurch gekennzeichnet, dass**
mindestens ein Antriebsrad (10', 10", 10‴, 10‴′) mit einem nicht angetriebenen Rad (11) des Transportfahrzeuges (1) mechanisch gekoppelt ist, in der Weise, dass diese stets in die gleiche Richtung drehen.

7. Transportfahrzeug (1) nach einem der vorangegangenen Ansprüche 4 bis 6,
**dadurch gekennzeichnet, dass**
Antriebsräder (10', 10", 10‴, 10‴′) und/oder nicht angetriebene Räder durch die Steuerung jeweils einzeln und/oder gekoppelt sind.

8. Transportfahrzeug (1) nach einem der vorangegangenen Ansprüche 4 bis 7,
**dadurch gekennzeichnet, dass**
der Abstand zwischen den Antriebsrädern (10', 10", 10‴, 10‴′) und/oder den nicht angetriebenen Rädern in Fahrrichtung (F) kleiner/gleich ist wie der Abstand zwischen der linken und der rechten Räderreihe.

9. Transportfahrzeug (1) nach einem der vorangegangenen Ansprüche 4 bis 8,
**dadurch gekennzeichnet, dass**
Antriebsräder (10', 10", 10‴, 10‴′) und/oder nicht angetriebene Räder dauerhaft angewinkelt positioniert sind, um ein Drehen des Transportfahrzeugs (1) zu begünstigen.
